## Europäisches Patentamt

## European Patent Office

## Office européen des brevets

(11) Veröffentlichungsnummer: **0 141 874**
**A1**

(12) # EUROPÄISCHE PATENTANMELDUNG

(21) Anmeldenummer: **83111386.5**

(51) Int. Cl.⁴: **F 15 B 13/044**

(22) Anmeldetag: **14.11.83**

(43) Veröffentlichungstag der Anmeldung: **22.05.85**
**Patentblatt 85/21**

(84) Benannte Vertragsstaaten: **CH DE FR LI NL**

(71) Anmelder: **Hans Hermes Steuerungstechnik,
Gewerbestrasse, D-6981 Dorfprozelten (DE)**

(72) Erfinder: **Hermes, Hans, Gewerbestrasse,
D-6981 Dorfprozelten (DE)**

(74) Vertreter: **Jaeger, Klaus, Dr. et al, JAEGER & PARTNER
Patentanwälte Bergstrasse 48 1/2,
D-8035 München-Gauting (DE)**

(54) **Wegeventilvorrichtung.**

(57) Für eine Wegeventilvorrichtung zur Steuerung von Fluiden zwischen Anschlüssen, insbesondere für pneumatische oder hydraulische Systeme, mit einer Antriebseinrichtung zur Erzeugung einer Relativbewegung zwischen einem Ventilkörper und einem Ventilsitz wird vorgesehen, als Ventilkörper einen Drehschieber (4), insbesondere Drehkolben (4), zu wählen, der rotativ um seine Längsachse durch einen nach Möglichkeit direkt damit gekoppelten elektrischen Schrittmotor (2) angesteuert wird.

**JAEGER & PARTNER**

PATENTANWÄLTE

0141874

HER-7-EP

Hans Hermes Steuerungstechnik

Gewerbestraße,   D-6981 Dorfprozelten

Wegeventilvorrichtung

## B e s c h r e i b u n g

Die Erfindung betrifft eine Wegeventilvorrichtung zur Steuerung
von Fluiden zwischen Anschlüssen gemäß Oberbegriff des
Anspruches 1.

Zur Steuerung von hydraulischen und pneumatischen Fluiden
ist es bekannt, Schieberventile oder auch Kolbenventile
einzusetzen, die üblicherweise zur Herstellung bzw. zum
Sperren von Fluidverbindungen in Längsrichtung bewegbar sind.
In der Regel können mit derartigen Steuerventilen etwa zwei
bis vier unterschiedliche Fluidverbindungen geschaltet werden.
Unter den Begriffen Schalten bzw. Steuern wird nachfolgend

BERGSTRASSE 48½ · D-8035 MÜNCHEN-GAUTING
TELEPHON: (089) 850 20 30 · TELEX: 521 777 isar d

das Sperren, Öffnen, Kurzschließen und dergleichen von Fluidanschlüssen verstanden, die mittels der Wegeventilvorrichtung
als Zwischenglied in oder außer Kommunikation gebracht werden
können. Die Wegeventilvorrichtung stellt in diesem Sinn einen
Steuermechanismus dar, um beispielsweise eine zentrale Druckquelle mit dezentralen Arbeitsaggregaten, wie etwa einen
doppelwirkenden Hydraulikzylinder mit einem Hydraulikmedium
beaufschlagen zu können.

Bei den bisherigen Steuerventilen, die teilweise auch Drehkolben umfassen, war es neben den relativ geringen Schaltstellungen, die diese konstruktiv ermöglichten, nachteilig, daß
sich bestimmte Schaltcharakteristiken für das Fluidmedium
technisch nicht realisieren ließen. Ursächlich hierfür ist die letztlich nur in groben Verstellwegen mögliche Regelbarkeit und
Verschiebbarkeit der entsprechenden Steuerventile. Zwar erreicht man mit den bekannten Steuerventilen schon eine
Proportionalregelung, die jedoch für Fein- und Feinststeuerungen,
wie sie bei numerisch und digital gesteuerten Regelkreisen
gefordert werden, nicht mehr ausreicht.

Für computergesteuerte Regelkreise, z.B. Roboter-Systemen,
sind hochauflösende Steuer- und Positionierungsvorgänge
zwangsläufig erforderlich, wobei dies mit herkömmlichen Steuerventilen nur schwierig und kostenaufwendig, z.B. durch die
Anordnung diverser Elektromotoren für jeden einzelnen Freiheitsgrad und jede einzelne Bewegungskomponente erreicht wird.

Aufgabe der Erfindung ist es daher, eine gattungsgemäße
Wegeventilvorrichtung wesentlich kompakter und kostengünstiger
zu gestalten, wobei über einen präzisen Einstellmechanismus
eine Vielzahl von Anschlußmöglichkeiten auch mit unterschiedlicher Fluidschaltcharakteristik gesteuert und eingestellt
werden kann.

Diese Aufgabe wird bei einer gattungsgemäßen Wegeventilvorrichtung durch die Merkmale des kennzeichnenden Teils des Anspruches 1 gelöst. Kerngedanke der Erfindung ist es, einen Ventilantrieb einzusetzen, der nahezu differentielle Einstellbewegungen des eigentlichen Steuerventils positiv wie negativ erlaubt. Da die Steuerungsmöglichkeit vorteilhafterweise sowohl zeit- wie auch wegabhängig, z.B. drehwegabhängig, realisierbar sein soll, ist hierfür ein Antrieb erforderlich, der kleinste Schaltschritte präzise und reproduzierbar einstellen kann.

Hierzu eignet sich vorzugsweise ein elektrisch angetriebener, digital steuerbarer Schrittmotor, der zur Vermeidung von mechanischen Übertragungsungenauigkeiten vorteilhafterweise direkt mit dem Steuerventil gekoppelt ist. Sofern sich anordnungs- und einbaumäßig bedingt eine direkte Kopplung des Steuerventils mit dem Schrittmotor nicht realisieren läßt, müssen bei der indirekten Kopplung Übertragungs- oder Umsetzungssysteme verwendet werden, die Präzisionseinstellungen ohne Schlupf mit hoher Arbeitsgeschwindigkeit zulassen.

Die für diesen Zweck einsetzbaren Schrittmotoren sind hinreichend bekannt, wobei abhängig vom Feinheitsgrad der Bewegungsabläufe der über die Wegeventilvorrichtung angesteuerten Arbeitsaggregate die durch den einzelnen Schrittmotortyp einstellbarer Anzahl von Schritten pro Umdrehung ausgewählt werden muß. Nur beispielhaft seien hier Schrittmotoren mit Mehrphasenständern und permanenterregten Wechselpolläufern oder Reluktanz- oder permanenterregten Gleichpolläufern erwähnt, wobei je nach Wahl Betriebsfrequenzen im kHz-Bereich erreicht werden können. Gleichwertig zu dem erfindungswesentlichen Merkmal elektrische Schrittmotoren für diesen Zweck einzusetzen, ist der Gedanke anzusehen, von Längsschiebern abzugehen und statt dessen einen Drehschieber, vorteilhafterweise einen Drehkolbenschieber als Ventilkörper zu nehmen. Durch diese rotative Bewegung des Ventilkörpers läßt sich einerseits überhaupt erst eine Direktkopplung mit einem Schrittmotor verwirklichen. Andererseits lassen sich gerade bei Drehkolben eine Vielzahl von Fluidkanälen über die axiale Länge des Drehkolbens vorsehen, wobei zusätzlich oder alternativ mehrere unterschiedliche Fluidkanäle auch in einer radialen Ebene eines Drehkolbens vorgesehen sein können.

Vorteilhafterweise wird der Ventilkörper als zylindrischer Drehkolben ausgebildet, der um seine Längsachse durch den zweckmäßigerweise direkt damit gekoppelten elektrischen Schrittmotor rotationsbeaufschlagt wird. Geht man beispielsweise von etwa 1000 Schrittstellungen pro Umdrehung des Drehkolbens aus, so ist erkennbar, daß Dreheinstellungen im Minutenbereich hiermit durchführbar sind. Es lassen sich daher Schaltcharakteristiken des Fluidmediums verwirklichen, z.B. quadratischer oder exponentieller Art, so daß die Einsatzmöglichkeit aufgrund der hochauflösenden Steuer- und Positioniermöglichkeit erheblich erweitert wird und auch eine Funktionsverbesserung gerade bei digital über Computer oder Mikroprozessor gesteuerten Regelkreisen möglich ist.

Die erweiterten Schaltcharakteristiken und damit das An- bzw. Ausfahrverhalten von fluidbeaufschlagten Arbeitsaggregaten, sind vor allen Dingen auf die exakte Schrittpositionierung der Anschlüsse des Drehkolbens gegenüber dem Ventilgehäuse zurückzuführen. Hierbei können z.B. durch minimalste Überlappung zugeordneter Fluidanschlüsse des Drehkolbens bzw. im Ventilgehäuse Drosselwirkungen erzielt werden. In anderen Fällen kann eine stetig zunehmende Fluidbeaufschlagung oder eine nahezu stufenartige Kraftbeaufschlagung erreicht werden. Aufgrund der Kombinationsvielfalt von Anschlüssen besteht durchaus auch die Möglichkeit eine Mehrfachbeaufschlagung eines Arbeitsaggregates bzw. von z.B. dessen Arbeitskolben über separate, unterschiedliche Fluidkanäle zu erreichen, die z.B. in axial zueinander versetzten Radialebenen des Ventilgehäuses angeordnet sind.

Die vorzugsweise im Hinblick auf das Dichtungsverhalten und die Belastungscharakteristik des Schrittmotores zylindrisch gewählte Ausführungsform des Drehkolbens, kann anwendungsbedingt auf der zylindrischen Mantelfläche auch mehr oder weniger axial durchgehende konkave Vertiefungsbereiche aufweisen. Im Zusammenwirken mit der Schrittsteuerung und der positionierten Schrittstellung können hierdurch beispielsweise Dämpfungscharakteristiken des Fluidmediums erzeugt werden.

Im Rahmen der eher streng zylindrischen Form des Drehkolbens als Ventilkörper können die in der Umfangswandung des Drehkolbens vorgesehenen Öffnungen mit Feinsteuerkerben ausgebildet sein. Vorzugsweise kann dies in Art einer sektoral erfolgenden Abflachung des ansonsten üblicherweise 90° aufweisenden Kantenbereiches erfolgen.In einer anderen Ausführungsform können derartige Feinsteuerkerben zweckmäßigerweise als strahlenförmiger Nutanschnitt der Fluidöffnungen am Drehkolben vorgesehen werden, wobei die nach einem Drehwinkel in die Mantelfläche des Drehkolbens auslaufende Nut sozusagen eine Feinüberdeckung bereits oder noch mit einer entsprechenden Fluidöffnung im Ventilgehäuse ermöglicht, während die Hauptfluidöffnung bereits außer Kommunikation mit einem entsprechenden Anschluß z.B. im Ventilgehäuse steht. Neben der präzisen Schrittsteuerung kann hierdurch die Bewegungsfunktion des eigentlichen Arbeitsaggregates mitbeeinflußt werden, da über die Feinsteuerkanäle sozusagen eine "vorauseilende" oder "nacheilende" Ansteuerungsphase erreicht wird.

Diese Feinsteuerkerben werden vorzugsweise in der radialen Hauptebene der entsprechenden Anschlußöffnung angeordnet. Aber auch die axiale Versetzung der Feinsteuerkerben ist so, daß zumindest eine minimale Überdeckung mit der zugeordneten, in Fluidverbindung zu versetzende Öffnung bei der Rotationsbewegung des Drehkolbens erreicht wird, denkbar, wobei auch hierdurch die Strömungs- und Ansteuerungscharakteristik mitbeeinflußbar ist.

Bereits im Hinblick auf die aufzubringenden Drehmomente wird vorteilhafterweise ein Drehkolben mit relativ kleinem Durchmesser gewählt, der mechanisch festverbunden mit einem elektrischen Schrittmotor ist. Die Rotationsbewegung wird daher in diesem Fall bevorzugterweise auf den Drehkolben übertragen. Neben dem in einem derartigen Fall zur relativen Schrittstellung auf den Drehkolben zu übertragenden Drehmoment, im Vergleich zur Masse des diesen umgebenden beispielsweise buchsenartigen Ventilgehäuses, ist auch die Ausbildung des Drehkörpers mit nur zwei unterschiedlichen Kanälen, nämlich einem Druck- und einem Entlastungskanal und deren jeweilige Verbindungskanäle von Vorteil. In dieser Konzeption können der Druck- bzw. Entlastungskanal mit ihren in der Umfangswandung des Drehkolbens vorhandenen Öffnungen beispielsweise um 180° gegeneinander versetzt sein, so daß relativ große Überdeckungswege bezogen auf einen Anschluß im Ventilgehäuse erreicht werden. Hierbei wird unter Überdeckungsweg der Rotationsweg des Drehkolbens relativ zu einer bestimmten Anschlußöffnung verstanden, der z.B. zwischen der Öffnung des Druckkanals und der in derselben Ebene gegebenenfalls vorhandenen Öffnung des Entlastungskanales bezogen auf die entsprechende Anschlußöffnung rotativ durchlaufen werden muß. Durch Verlängerung der Überdeckungswege
kann auch die Abdichtung zwischen der einzelnen Anschlußöffnung im  Ventilgehäuse und der entsprechenden Druckkanalöffnung im Drehkolben verbessert werden, so daß hierdurch
die Qualität des Wegeventils gesteigert und die Leckverluste
an Fluidmedium verringert werden.

Während in herkömmlichen Wegeventilvorrichtungen die exakte
Positionierung des Ventilkörpers in der Regel ungenau und
indirekt wiedergegeben werden konnte, erlaubt es der Einsatz
eines direkt mit dem Drehkolben gekoppelten Schrittmotors,
die Stellung des Schrittmotors als exakte Ist-Position des
Ventilkörpers zu nehmen. Die genaue und reproduzierbare
Schrittunterteilung der Drehbewegung des Drehkörpers ermöglicht daher sowohl eine zeit- wie wegeabhängige Schaltfunktion.
Die impulsmäßige Ansteuerung des Schrittmotors erlaubt daher
im Zusammenwirken in dem als Drehkolben ausgebildeten Ventilkörper, den Einsatz in digital  gesteuerten Regelkreisen
von höchster Genauigkeit. Die für ein derartiges Steuerventil
in Frage kommenden Fluidmedium sind dem Fachmann hinreichend
bekannt, wobei exemplarisch lediglich die Inkompressibilität
und Temperaturunabhängigkeit erwähnt seien. Die im Ventilgehäuse vorgesehenen Fluidanschlüsse, die druckbeaufschlagbare Arbeitsanschlüsse oder Rückflußanschlüsse des entsprechenden Fluidmediums sein können, können sowohl in einer
Radialebene bezogen auf die Achse des Drehkolbens, gegebenenfalls auch winkelversetzt zueinander oder in verschieden
axial versetzten Radialebenen des Ventilgehäuses angeordnet
sein. Es bietet sich daher eine Vielfalt von Schaltfunktionen
und Steuerungsmöglichkeiten an,die über einen einzigen im Drehkolben vorgesehen Druckkanalanschluß und Entlastungskanalanschluß steuerbar sind. Selbstverständlich ist es bei einer
Anordnung der Anschlüsse in verschiedenen Radialebenen erforderlich, daß Druck- und Entlastungskanal im Drehkolben
selbst Verbindungswege aufweisen, die in der Umfangswand des Drehkolbens radial nach außen orientierte Fluidöffnungen
besitzen. Über derartige Fluidöffnungen kommunizieren dann
der Druck- oder Entlastungskanal mit entsprechenden zu
schaltenden Arbeits- oder Rückflußanschlüssen.

Vorzugsweise werden bei einem etwa buchsenartig aufgebauten
Ventilgehäuse die darin vorgesehenen Anschlußkanäle, wobei
hierbei auf ein System mit Druckmittelzufluß und Druckmittelrückfluß abgestellt ist, diametral gegenüber angeordnet,
wobei gleiches für die im Drehkolben vorgesehenen Fluidkanäle
gilt. Andererseits kann die Anordnung von zusammengehörenden
Anschlußkanälen auch winkelversetzt zueinander, z.B. mit 90°
oder kleiner, vorgesehen sein. Vorteilhafterweise wird jedoch
im  Hinblick auf die hohe Rotationsgeschwindigkeit und der
abrupten Schrittschaltcharakteristik eine symmetrische  Auslegung angestrebt, so daß eine bessere Lagerung und letztenendes eine höhere Standzeit der Ventilvorrichtung erreicht
wird. Obwohl es in der Regel auch qualitativ ausreicht,
den Drehkolben direkt in einer komplementären Bohrung des
Ventilgehäuses zu führen, kann beispielsweise zur Verbesserung der Gleiteigenschaften unter Berücksichtigung der
Dichtungsverhältnisse eine Zwischenbuchse im Ventilgehäuse
befestigt sein, in der dann der Drehkolben rotativ schrittgesteuert wird.

Da vorzugsweise nur ein einziger Druckanschluß und ein
einziger Entlastungsanschluß mit dem Ventilgehäuses in Verbindung steht, über die das Druckmedium dem Arbeitsaggregat
zugeführt wird bzw. von diesem zurückfließt, werden Druckkanal und Entlastungskanal zweckmäßigerweise mit einem
peripher am zylindrischen Umfangsmantel des Drehkolbens
etwa in einer radialen Ebene verlaufenden Ringkanal ausgestattet. Von diesem Ringkanal bzw. dem Druckanalanschluß
im Drehkolben gehen Verbindungskanäle aus, die fertigungstechnisch vorzugsweise radial in die Mantelfläche austretende Verbindungsöffnungen für die im Ventilgehäuse vorgesehenen
Anschlußöffnungen aufweisen. In dieser Ausgestaltung sind
winkelversetzt mehrere Verbindungskanäle möglich , so daß
gleichzeitig auch mehrere Arbeitsanschlüsse druckmittelbeaufschlagt werden können.

In ähnlicher Ausbildung weist auch der Entlastungskanal
einen peripheren Ringkanal auf, der über einen etwa achsparallel zur Achse des Drehkolbens verlaufenden Verbindungskanal mit diversen radialen Anschlußöffnungen die Verbindungsmöglichkeit zu den Anschlußöffnungen im Ventilgehäuse schafft.
Der Entlastungskanal ist zweckmäßigerweise so gestaltet, daß
er bis in die Stirnflächen der entsprechenden Ventilgehäusebohrung weist, die den Drehkolben aufnimmt, um eventuell
auftretendes Leckfluid ableiten zu können. Abdichtungsprobleme
und Lösungen zwischen Ventildrehkolben und entsprechenden
Ventilgehäuses sind dem Fachmann hinreichend bekannt. So kann
beispielsweise durch Anbringen axial versetzter Dichtungsringe in der Umfangswand des den Drehkolben aufnehmenden
Ventilgehäuses eine axiale Dichtung erzeugt werden. Andererseits können auch die entsprechenden Anschlußöffnungen im
Ventilgehäuse bzw. im Drehkolben selbst mit separaten um die
Öffnung herum angeordneten Dichtungen ausgestattet sein.

Je nach den äußeren geometrischen Abmessungen des Ventilgehäuses ist es möglich, die Außenanschlüsse entweder am Umfang
des Ventilgehäuses verteilt, also z.B. über 360° anzuordnen.
Andererseits besteht auch die Möglichkeit z.B. bei quaderförmigen Ventilgehäuses alle erforderlichen Anschlüsse auf
einer einzigen Gehäusefläche vorzusehen. Hierdurch ist eine
noch kompaktere Anschlußmöglichkeit für die Wegeventilvorrichtung möglich.

Obwohl vorausgehend im wesentlichen von der Fluidverbindung
zwischen dem zur Druckquelle führenden Druckkanal und entsprechenden Arbeitsanschlüssen bzw. Entlastungsanschlüssen für das letztlich vom Druckmittel zu beaufschlagende
Arbeitsaggregat gesprochen wurde, erlaubt es die Konzeption
der Erfindung auch unterschiedliche Arbeitsanschlüsse parallel
druckzubeaufschlagen oder ohne Druckbeaufschlagung kurzzuschließen. Es besteht daher z.B. die Möglichkeit, mit dieser
Wegeventilvorrichtung sowohl eine 4/2- als auch eine 4/3-
Wegeschaltung einzustellen, wobei auch Sperrstellungen, Umlaufstellungen zwischen Druck- und Entlastungsanschluß oder
Fluidverbindungen zwischen den Arbeitsanschlüssen und Rückflußanschlüssen einstellbar sind. Die Erfindung erlaubt daher
eine nahezu universelle Verbindungsmöglichkeit von Anschlüssen
miteinander, wobei die positiv  wie negativ inkremental
kleinen Schrittstellungen in ihrer Reproduzierbarkeit nahezu
jegliche gewünschte Schalt- und Steuerungscharakteristik des
Fluidmediums erlauben.

Die Erfindung ist nachstehend anhand schematischer Zeichnungen
eines Ausführungsbeispieles näher erläutert. Es zeigen:

Fig. 1          einen Axialschnitt durch einen
                Drehkolben mit zugeordnetem
                Ventilgehäuse, wobei der Drehkolben mechanisch fest mit einem
                nicht geschnittenen Schrittmotor
                gekoppelt ist;

Fig. 2          eine Draufsicht auf die Wegeventilvorrichtung nach Fig. 1 in Blickrichtung auf den Schrittmotor, wobei die
                in diesem Beispiel vorgesehenen Fluid-
                anschlüsse und Kanäle mit unterbro-
                chener Linie dargestellt sind;

- 11 -

0141874

| | |
|---|---|
| Fig. 3 | einen Radialschnitt durch die Wegeventilvorrichtung nach Fig. 2 in einer axialen Höhe, in der vier Fluidkanäle vorgesehen sind; |
| Fig. 4 | einen Schnitt in einer radialen Ebene ähnlich wie nach Fig. 3 jedoch axial versetzt dazu, wobei lediglich zwei Fluidkanäle geschnitten werden; und |
| Fig. 5 | eine Seitenansicht auf eine Außenfläche eines quaderförmigen Ventilgehäuses, bei dem sämtliche Fluidanschlüsse auf einer Seite vorgesehen sind. |

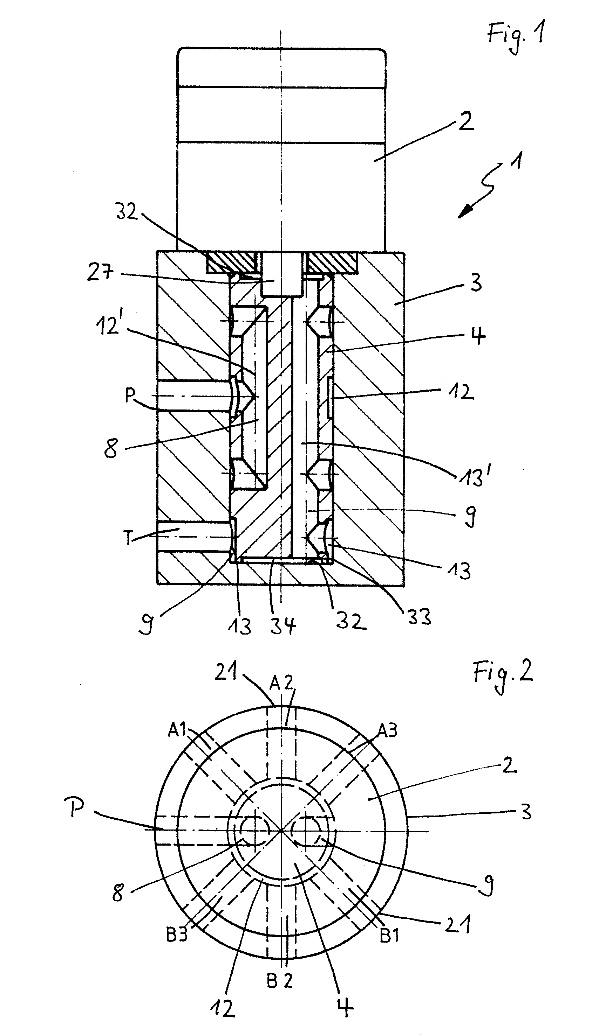

In Fig. 1 ist eine Wegeventilvorrichtung 1 gemäß der Erfindung mit ihren wesentlichen Baugruppen dargestellt, wobei die Außenanschlüsse aus Vereinfachungsgründen weggelassen wurden. Das eigentliche Ventil besteht dabei aus einem Ventilgehäuse 3, in dessen axialer Innenbohrung ein im wesentlichen komplementär zu dieser Bohrung ausgebildeter Ventilkörper als Drehkolben 4 aufgenommen ist. Der Drehkolben 4 ist mechanisch starr mit der Abtriebswelle 27 eines auf dem Ventilgehäuse aufgesetzten und daran befestigten Schrittmotors 2 verbunden. Das Ventilgehäuse 3 und der Drehkolben 4 sind dabei in Richtung zum elektrischen Schrittmotor 2 durch einen eingesetzten und befestigten Flanschdeckel gegenüber dem zu steuernden Hydraulikmedium abgedichtet. Der Schnitt durch das Ventilgehäuse ist nach Fig. 1 gerade so gelegt, daß er durch den axial zueinander versetzten Druckanschluß P und den zugeordneten Entlastungsanschluß T geht. Der Druckanschluß P und der Entlastungsanschluß T verlaufen dabei etwa senkrecht zur Achse der Wegeventilvorrichtung 1, wobei in der Darstellung nach Fig. 1 der Druckanschluß P etwa in halber Höhe des Ventilgehäuses 3 und der Entlastungsanschluß T im Bereich der unteren Stirnfläche 32 der Innenbohrung des Ventilgehäuses
3 angeordnet ist.

Die Anordnung der Wegeventilvorrichtung 1 nach Fig. 1 ist
nur exemplarisch zu verstehen und braucht selbstverständlich nicht mit der Vertikalachse zusammen zu fallen. Ebenso
kann eine Horizontalanordnung oder Zwischenwinkelanordnung
vorgesehen werden.

Der Druckanschluß P dient der Zuführung des Druckmediums,
z.B. eines Hydrauliköls, von der Druckquelle über das
steuernde Wegeventil zu dem oder den vom Druckmedium zu beaufschlagenden Arbeitsaggregaten. Der Entlastungsanschluß T
hat demgegenüber die Funktion das vom Arbeitsaggregat zurückfließende oder druckversetzt zurücklaufende Druckmedium
einem Vorratsbehälter zuzuführen, von dem aus es erneut
in den Druckmittelkreis gefördert wird.

Der Druckanschluß P mündet in der in Fig. 1 gezeigten Schrittstellung des Drehkolbens 4 in einen peripheren Ringkanal 12,
der in der zylindrischen Umfangswandung des Drehkolbens ausgebildet ist und etwa einen länglichen Rechteckquerschnitt
aufweist. Der Ringkanal 12 steht auf der linken Seite des
Drehkolbens 4 mit einem etwa achsparallel und vertikal verlaufenden Verbindungskanal 12' in Verbindung, der in einem
bestimmten Achsabstand nach oben und unten in radial gegen
die Umfangswandung der Innenbohrung des Gehäuses 3
gerichtete Anschlußöffnungen übergeht. Im Beispiel nach Fig. 1
befinden sich diese Anschlußöffnungen gerade in einer Winkelstellung, in der keine Kommunikation mit einer entsprechenden
Anschlußöffnung im Ventilgehäuse 3 vorhanden ist.

Ähnlich wie der Druckanschluß P weist auch der Entlastungsanschluß T einen peripheren Ringkanal 13 auf. Obwohl der
Entlastungsanschluß T im Schnitt nach Fig. 1 im linken Ventilgehäusebereich vorgesehen ist, steht dieser über den Ring-

kanal 13 und einen im rechten Bereich des Drehkolbens 4 etwa
vertikal verlaufenden Verbindungskanal 13' mit zwei auf
gleicher axialer Höhe wie die Anschlußöffnungen des Druckanschlusses vorgesehenen, nach radial außen orientierten
Anschlußöffnungen in Verbindung. Mit anderen Worten, der
Verbindungskanal 12' des Druckanschlusses und der Verbindungskanal 13' des Entlastungsanschlusses T sind im Drehkolben 4
um 180° zueinander versetzt angeordnet, wobei dies durch die in
Gegenrichtung nach radial außen orientierten Anschlußöffnungen
unterstrichen wird.

Der Verbindungskanal 13' ist im Beispiel über die axiale Länge
des Drehkolbens 4 durchgehend ausgebildet und mündet in die
auf beiden Stirnseiten des Drehkolbens 4 vorgesehenen flachen,
kreisförmigen Vertiefungen. Der periphere Ringkanal 13 des
Entlastungsanschlusses T reicht axial gesehen bis zur Stirnfläche 32 der Innenbohrung des Ventilgehäuses 3 und ist
durch eine in axialer Richtung orientierte, umlaufende Ringschulter gegenüber der Vertiefung 34 getrennt. Der axial verlaufende Verbindungskanal 13' kann jedoch anders als im Beispiel gezeigt, im Bereich der Stirnflächen des Drehkolbens 4
auch abgeschlossen ausgebildet sein. Die Erstreckung des
Verbindungskanales 13' sowie des Ringkanales 13 bis in den
Stirnflächenbereich 32 dient letztlich dazu, das sich in diesen
Bereich, z.B. durch Leckagen, ansammelnde Druckmittel,
aus der Wegeventilvorrichtung abzuleiten.

Wie aus der axialen Schnittdarstellung nach Fig. 1 erkennbar,
befinden sich die Anschlüsse im Ventilgehäuse 3 bzw. im Drehkolben 4 in vier verschiedenen axial gegeneinander versetzten
Radialebenen. In der in Fig. 2 gezeigten Draufsicht auf den
Schrittmotor 2 sind Arbeitsanschlüsse A1, A2, A3 und die entsprechenden zugeordneten Rückflußanschlüsse wie B1, B2 und
B3 mit unterbrochener Linie dargestellt. Des weiteren ist
der durch das Ventilgehäuse 3 geführte Druckanschluß P mit dem teils axial, teils radial im Drehkolben 4 verlaufenden Druckkanal erkennbar. Sozusagen durch den Druckanschluß P verdeckt, ist in einer axial darunterliegenden Ebene der Entlastungsanschluß T vorgesehen, der um 180° gegenüber dem Druckkanal 8 versetzt, seinen Entlastungskanal 9 aufweist. Der Arbeitsanschluß A2 und der zugeordnete Rückflußanschluß B2 sind um 90° winkelversetzt gegenüber dem Druckanschluß P vorgesehen. Ebenfalls um 90° winkelversetzt gegeneinander sind die weiteren Arbeitsanschlüsse A1 und A3 bzw. deren Rückflußanschlüsse B1 und B3 in radialer Richtung durch das Ventilgehäuse 3 angeordnet. Gegenüber dem Arbeitsanschluß A2 bzw. dessen Rückflußanschluß B2 weisen die Anschlüsse A1 und A3 eine Winkelversetzung von etwa 45° ebenso wie deren Rückflußanschlüsse auf.

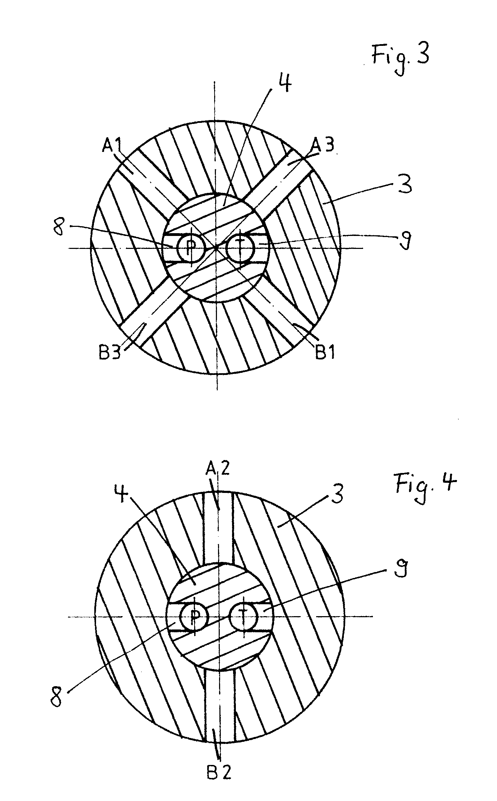

Der Radialschnitt durch die Wegeventilvorrichtung nach Fig. 3 ist in der Ebene der Anschlüsse A1, A3, B1, B3 gelegt. Insbesondere hier ist erkennbar, daß der Drehkolben 4 eine kreisförmige Querschnittsfläche aufweist, in der die axial in die Ebene hinein bzw. herausverlaufenden Kanäle P und T mit radialen Querverbindungen vorgesehen sind.

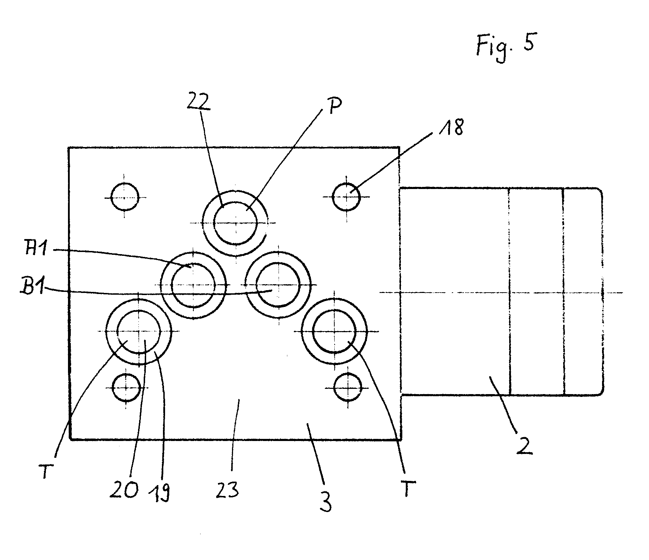

Der Radialschnitt nach Fig. 4 liegt in der Ebene der Anschlüsse A2 und B2, die in der Zeichenebene verlaufen. Die Stellung des Drehkolbens 4 im Schnitt nach Fig. 4 ist dort gerade so, daß der Druckkanal 8 bzw. der Entlastungskanal 9 mit ihrer Verbindungslinie etwa senkrecht zur Verbindungslinie der Anschlüsse A2 und B2 angeordnet sind. Mit anderen Worten, in den Darstellungen nach den Figuren 3 und 4 befindet sich der Druckanschluß P und der dazu um 180° versetzte Entlastungsanschluß T des Drehkolbens 4 in einer Stellung, in der sämtliche im Beispiel vorhandenen Arbeitsanschlüsse A1, A2 und A3 sowie deren Rückflußanschlüsse B1, B2 und B3 gesperrt sind. Lediglich wie im Axialschnitt nach Fig. 1 erkennbar, steht der im wesentlichen axial verlaufende Druckkanal 8 mit seinem Druckanschluß P in Verbindung. Gleiches gilt für die Fluidverbindung zwischen dem axial verlaufenden Entlastungskanal 9, der über den Ringkanal 13 mit dem Entlastungsanschluß T verbunden ist.

Aus Vereinfachungsgründen sind die in der Wegeventilvorrichtung vorhandenen Kanäle im Schnitt kreisförmig mit in etwa 90° dazu verlaufenden radialen Anschlußbereichen ausgebildet. An dieser Stelle kann selbstverständlich auch eine strömungsgünstigere Kanalauslegung z.B. in gerundeter Form mit Leiteinrichtungen vorgesehen sein, die die Strömungsdynamik des zu steuernden Druckmediums verbessert. Die Wegeventilvorrichtung ist dabei nicht auf das Ausführungsbeispiel beschränkt, so daß z.B. auch mehrere Druckanschlüsse P mit entsprechenden Entlastungsanschlüssen T auch winkelversetzt zueinander vorgesehen sein können.

Ausgehend von der in Fig. 3 gezeigten Schrittstellung erreicht bei einer sukzessiven Rechtsrotation des Drehkolbens 4 der Druckkanal 8 nach etwa 45° eine vollständige Ausrichtung mit dem Arbeitsanschluß A1. Gleichzeitig fluchtet in dieser Stellung der Entlastungskanal 9 mit dem Rückflußanschluß B1. Bei einem im Druckanschluß P anstehenden Druckmedium, würde daher die mit dem Arbeitsanschluß A1 verbundene Seite des Arbeitsaggregates druckbeaufschlagt werden, während über den Rückflußanschluß B1 das verdrängte Druckmedium zum Entlastungsanschluß T und zu einem Vorratsbehälter zurückfließen kann. Durch die inkremental positiv wie negativ kleinen Schrittbewegungen des Drehkolbens 4 ist es beispielsweise möglich, abrupt eine vollständige Überdeckung, d.h. Ausrichtung des Druckkanales 8 mit dem Arbeitsanschluß 1 zu erreichen, so daß das Arbeitsaggregat stoßartig beaufschlagt wird. Andererseits läßt die durch den elektrischen Schrittmotor geschaltete Schrittstellung auch eine Feinfühligkeit zu, die den Druckkanal 8 nur sehr geringfügig gegenüber dem Arbeitsanschluß A1 öffnet. Dies kann sowohl zeit- wie wegabhängig geschehen,
so daß unterschiedlichste Funktionsverläufe der Steuerung
des Druckmediums erreicht werden.

Während im Beispiel nach den Figuren 1 bis 3 die Außenanschlüsse 21 über den 360°-Umfang des Ventilgehäuses verteilt
angeordnet sind, kann dies ebenso auf einer einzigen Anschlußfläche 23 erfolgen. Im Beispiel nach Fig. 5 ist das
Ventilgehäuse 3 quaderförmig gehalten. Auf der parallel
zur Zeichenebene liegende Anschlußfläche 23 sind daher sämtliche Anschlüsse, in diesem Fall P, zwei T-Anschlüsse, A1 und
B1, vorgesehen. Eine derartige Wegeventilvorrichtung kann
dabei mit dieser Anschlußfläche 23 über entsprechende Gehäusebohrungen 18 z.B. an einem größeren Arbeitsaggregat befestigt
werden. Anschlußdichtungen können z.B. in den Durchmesser
größeren Senkbohrungen 19 aufgenommen werden, die die Kanalöffnungen 20 umgeben.

Hans Hermes Steuerungstechnik

Gewerbestraße, D-6981 Dorfprozelten

---

Wegeventilvorrichtung

---

P a t e n t a n s p r ü c h e

1. Wegeventilvorrichtung zur Steuerung von Fluiden zwischen
   Anschlüssen, insbesondere für pneumatische oder
   hydraulische Systeme, mit einer Antriebseinrichtung zur
   Erzeugung einer Relativbewegung zwischen einem Ventilkörper und einem Ventilgehäuse oder einem Ventilsitz,
   dadurch   g e k e n n z e i c h n e t ,
   daß der Ventilkörper als Drehschieber (4) ausgebildet
   ist und zur Relativbewegung des Drehschiebers (4) und
   des Ventilgehäuses (3) gegeneinander ein direkt oder
   indirekt gekoppelter Schrittmotor (2) vorgesehen ist.

2. Vorrichtung nach Anspruch 1,
   dadurch   g e k e n n z e i c h n e t ,
   daß der Drehschieber als Drehkolben (4) ausgebildet ist,
   der rotativ direkt mit einem elektrischen Schrittmotor
   (3) gekoppelt ist.

3. Vorrichtung nach Anspruch 2,
   dadurch  g e k e n n z e i c h n e t ,
   daß der Schrittmotor (2) für eine Vielzahl von
   Schrittstellungen pro Umdrehung des Drehkolbens (4)
   ausgelegt ist.


4. Vorrichtung nach Anspruch 2 oder 3,
   dadurch  g e k e n n z e i c h n e t ,
   daß der Drehkolben (4) mindestens   einen Druckkanal (P,8)
   und einen Entlastungskanal (T,9 ) aufweist, der/die in
   mindestens einer vorgegebenen Rotationsstellung mit
   einem oder mehreren Arbeitsanschlüssen(A1, A2, B1, B2, B3)
   in Fluidverbindung steht/stehen.


5. Vorrichtung nach einem der Ansprüche 2 bis 4,
   dadurch  g e k e n n z e i c h n e t ,
   daß die Fluidkanäle (A1, A2, A3, B1, B2, B3, P,T, 8,9)
   im Ventilgehäuse (3) und/oder im Drehkolben (4)oder mehreren
   radialen Ebenen zum sich axial erstreckenden Drehkolben (4)
   angeordnet sind.


6. Vorrichtung nach einem der Ansprüche 2 bis 5,
   dadurch  g e k e n n z e i c h n e t ,
   daß zugeordnete Fluidkanäle (A1, B1; A2, B2; A3, B3;P,T) winkelversetzt zueinander und/oder in axial gegeneinander versetzten Radialebenen angeordnet sind.


7. Vorrichtung nach einem der Ansprüche 2 bis 6,
   dadurch  g e k e n n z e i c h n e t ,
   daß der Druckkanal (P,8 ) und/oder der Entlastungskanal (T,9)
   jeweils einen peripheren Ringkanal (12,13 ) am Drehkolben
   (4) aufweisen, der bzw. die im wesentlichen achsparallel
   verlaufende Verbindungskanäle (12',13') haben, die mit zum Ringkanal (12,13) axial versetzten Arbeitsanschlüssen
(A1,A2,A3,B1,B2,B3) in Fluidverbindung bringbar sind.


8. Vorrichtung nach einem der Ansprüche 2 bis 7,
   dadurch  g e k e n n z e i c h n e t ,
   daß die Außenanschlüsse (21;22) der Fluidkanäle (A1,A2,A3,
   B1,B2,B3,P,T) am Ventilgehäuse (3), insbesondere bei einem
   zylindrischen Ventilgehäuse, am Umfang verteilt angeordnet
   sind oder, insbesondere bei einem quaderartigen Ventilgehäuse, über dessen axiale Baulänge verteilt, insbesondere
   auf einer Außenanschlußfläche (23) vorgesehen sind.


9. Vorrichtung nach einem der Ansprüche 2 bis 8,
   dadurch  g e k e n n z e i c h n e t ,
   daß die Öffnungen (20) der Fluidkanäle (A1,A2,A3,B1,B2,
   B3,P,T), insbesondere am Umfang des Drehkolbens (4)
   mit Feinsteuerkerben versehen sind.


10. Vorrichtung nach einem der Ansprüche 2 bis 9,
    dadurch  g e k e n n z e i c h n e t ,
    daß der/die Entlastungsanschlüsse (T) zur Aufnahme von
    Fluidleckagen bis in die Stirnflächen ( 32  ) des
    Drehkolbensitzes im Ventilgehäuse (3) ausgebildet ist/sind.


11. Vorrichtung nach einem der Ansprüche 2 bis 10,
    dadurch  g e k e n n z e i c h n e t ,
    daß der Drehkolben (4) in einer Ventilgehäusebuchse
    geführt ist.

0141874

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-3 033 864 (NISSAN MOTOR) <br> * Anspruch 1; Figur 2, Positionen 40, 60, 54 * | 1-3,11 | F 15 B 13/044 |
| A | FR-A-2 247 005 (MASCHINENFABRIK WEINGARTEN) <br> * Ganzes Dokument * | 1,3 | |
| A | GB-A-1 024 108 (GEWERKSCHAFT EISENHUTTE WESTFALIA) <br> * Seite 1, Zeile 65 - Seite 2, Zeile 26; Figuren 1-4 * | 4-8 | |
| A | GB-A- 962 794 (SPERRY GYROSCOPE) <br> * Seite 4, Zeilen 23-37; Figuren 7, 8 * | 9 | RECHERCHIERTE SACHGEBIETE (Int. Cl. ³) |
| A | US-A-3 128 793 (C.E. SCHOU) <br> * Spalte 4, Zeilen 29-51; Figuren 2, 5 * | 10 | F 15 B 13/00 <br> F 16 K 11/00 <br> F 16 K 31/00 |

Der vorliegende Recherchenbericht wurde für alle Patentansprüche erstellt.

| Recherchenort | Abschlußdatum der Recherche | Prüfer |
|---|---|---|
| BERLIN | 05-06-1984 | LEMBLE Y.A.F.M. |